# EUROPEAN PATENT APPLICATION

(11) **EP 2 571 211 A2**
(43) Date of publication of application: **20.03.2013**
(21) Application number: 12184033.4
(22) Date of filing: 12.09.2012
(51) Int. Cl.: H04L 12/763

(54) **OSPF NSR with delayed neighbor synchronization**

(30) Priority: 16.09.2011 US 201161535938 P; 29.09.2011 US 201161541069 P; 30.09.2011 US 201161542065 P; 02.12.2011 US 201113310656
(71) Applicant: Telefonaktiebolaget L M Ericsson (PUBL), 164 83 Stockholm (SE)
(72) Inventor: Lindem, Alfred C., Cary, NC 27519 (US); Lu, Wenhu, San Jose, CA 95129 (US); Chen, Ing-Wher, San Jose, CA 95125 (US)
(74) Representative: HOFFMANN EITLE

(57) **Abstract**

Open Shortest Path First (OSPF) Non-stop Routing (NSR) with delayed neighbor synchronization is described. A network element includes a first OSPF instance currently acting as an active OSPF instance and a second OSPF instance currently acting as a standby OSPF instance. The network element attempts to bring up an adjacency with a neighbor network element using a neighbor state machine of the active OSPF instance. This attempt includes: maintaining a neighbor data structure for the neighbor network element only in the active OSPF instance prior to the neighbor state machine transitioning to a Full state, delaying synchronization from the active OSPF instance to the standby OSPF instance of the neighbor data structure for the neighbor network element, maintaining tracking information of the neighbor state machine in only the active OSPF instance to avoid the complexity of synchronizing it to the standby OSPF instance; installing link state advertisements (LSAs) received from the neighbor network element in both the link state database (LSDB) of the active OSPF instance and the standby OSPF instance, and, if and when the neighbor state machine of the active OSPF instance transitions to the Full state and all LSAs requested from the neighbor during database exchange are ensured to synchronize to the standby OSPF instance's LSDB, synchronizing from the active OSPF instance to the standby OSPF instance a set of one or more data items of the neighbor data structure for the neighbor network element. However, if and when a switch causes the second OSPF instance to act as the active OSPF instance prior to synchronization of the neighbor data structure from the first OSPF instance to the second OSPF instance, the state transitions are started over using a neighbor state machine of the second OSPF instance in an attempt to bring up the adjacency with the neighbor network element as opposed to picking up where the neighbor state machine of the first OSPF instance left off.

## Description

### CROSS-REFERENCE TO RELATED APPLICATIONS

This application claims the benefit of U.S. Provisional Application No. 61/542,065, filed September 30, 2011; U.S. Provisional Application No. 61/541,069, filed September 29, 2011; and U.S. Provisional Application No. 61/535,938, filed September 16, 2011, which are hereby incorporated by reference.

### FIELD

Embodiments of the invention relate to the field of computer networking; and more specifically, to Non-stop Routing (NSR) using the Open Shortest Path First (OSPF) protocol, as defined in RFC 2328.

### BACKGROUND

A computer network is a geographically distributed collection of interconnected communication links and subnetworks for transporting data between nodes, such as computers. Many types of computer networks are available, with the types ranging from local area networks (LANs) to wide area networks (WANs). A LAN is an example of a subnetwork that provides relatively short distance communication among the interconnected stations, whereas a wide area network enables long distance communication over a larger geographic area using links provided by public or private telecommunications facilities. The nodes typically communicate by exchanging discrete frames or packets of data according to predefined protocols. In this context, a protocol consists of a set of rules defining how the nodes interact with each other.

Computer networks may be further interconnected by an intermediate node, called a router, to extend the effective "size" of each network. Since management of a large system of interconnected computer networks can prove burdensome, smaller groups of computer networks may be maintained as routing domains or autonomous systems. The networks within an autonomous system are typically coupled together by conventional intradomain routers. These routers manage communication among local networks within their domains and communicate with each other using an intradomain routing (or interior gateway) protocol (IGP). An example of such a protocol is the Open Shortest Path First (OSPF) routing protocol described in Request for Comments (RFC) 2328 , OSPF Version 2, by J. Moy (1998). The OSPF protocol is based on link-state technology, and, therefore, each router participating in an autonomous system (AS) maintains an identical link state database (LSDB) describing the topology of the AS.

### SUMMARY

Open Shortest Path First (OSPF) Non-stop Routing (NSR) with delayed neighbor synchronization is described. According to one embodiment of the invention, a network element includes a first OSPF instance currently acting as an active OSPF instance and a second OSPF instance currently acting as a standby OSPF instance. The network element attempts to bring up an adjacency with a neighbor network element using a neighbor state machine of the active OSPF instance. This attempt includes: maintaining a neighbor data structure for the neighbor network element only in the active OSPF instance prior to the neighbor state machine transitioning to a Full state, delaying synchronization from the active OSPF instance to the standby OSPF instance of the neighbor data structure for the neighbor network element, maintaining tracking information of the neighbor state machine in only the active OSPF instance to avoid the complexity of synchronizing it to the standby OSPF instance; installing link state advertisements (LSAs) received from the neighbor network element in both the link state database (LSDB) of the active OSPF instance and the standby OSPF instance, and, if and when the neighbor state machine of the active OSPF instance transitions to the Full state and all LSAs requested from the neighbor during database exchange are ensured to synchronize to the standby OSPF instance's LSDB, synchronizing from the active OSPF instance to the standby OSPF instance a set of one or more data items of the neighbor data structure for the neighbor network element. However, if and when a switch causes the second OSPF instance to act as the active OSPF instance prior to synchronization of the neighbor data structure from the first OSPF instance to the second OSPF instance, the state transitions are started over using a neighbor state machine of the second OSPF instance in an attempt to bring up the adjacency with the neighbor network element as opposed to picking up where the neighbor state machine of the first OSPF instance left off.

### BRIEF DESCRIPTION OF THE DRAWINGS

The invention may best be understood by referring to the following description and accompanying drawings that are used to illustrate embodiments of the invention. In the drawings:

Figure 1 is a block diagram illustrating an example of OSPF NSR with delayed neighbor synchronization according to embodiments of the invention.

Figure 2 is a block diagram and a flow diagram illustrating an example of the neighbor state machine (NSM) transitioning from the full state according to embodiments of the invention.

Figure 3 is a block diagram and a flow diagram illustrating an example of the second OSPF instance being switched from standby to active prior to the synchronization of the neighbor data structure according to embodiments of the invention.

Figure 4 is a flow diagram illustrating OSPF NSR with delayed neighbor synchronization according to embodiments of the invention.

### DESCRIPTION OF EMBODIMENTS

In the following description, numerous specific details are set forth. However, it is understood that embodiments of the invention may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

As used herein, a network element (e.g., a router, switch, bridge) is a piece of networking equipment, including hardware and software, that communicatively interconnects other equipment on the network (e.g., other network elements, end stations). Thus, the techniques shown in the figures can be implemented using code and data stored and executed on a network element, where such storage is effected using non-transitory computer-readable storage media (e.g., magnetic disks; optical disks; random access memory; read only memory; flash memory devices; phase-change memory). Some network elements are "multiple services network elements" that provide support for multiple networking functions (e.g., routing, bridging, switching, Layer 2 aggregation, session border control, Quality of Service, and/or subscriber management), and/or provide support for multiple application services (e.g., data, voice, and video). Subscriber end stations (e.g., servers, workstations, laptops, netbooks, palm tops, mobile phones, smartphones, multimedia phones, Voice Over Internet Protocol (VOIP) phones, user equipment, terminals, portable media players, GPS units, gaming systems, set-top boxes) access content/services provided over the Internet and/or content/services provided on virtual private networks (VPNs) overlaid on (e.g., tunneled through) the Internet. The content and/or services are typically provided by one or more end stations (e.g., server end stations) belonging to a service or content provider or end stations participating in a peer to peer service, and may include, for example, public webpages (e.g., free content, store fronts, search services), private webpages (e.g., username/password accessed webpages providing email services), and/or corporate networks over VPNs. Typically, subscriber end stations are coupled (e.g., though customer premise equipment coupled to an access network (wired or wirelessly)) to edge network elements, which are coupled (e.g., through one or more core network elements) to other edge network elements, which are coupled to other end stations (e.g., server end stations).

Network elements are commonly separated into a control plane and a data plane (sometimes referred to as a forwarding plane or a media plane). In the case that the network element is a router (or is implementing routing functionality), the control plane typically determines how data (e.g., packets) is to be routed (e.g., the next hop for the data and the outgoing port for that data), and the data plane is in charge of forwarding that data. For example, the control plane typically includes one or more routing protocols (e.g., Border Gateway Protocol (BGP), Interior Gateway Protocol(s) (IGP) (e.g., Open Shortest Path First (OSPF), Routing Information Protocol (RIP), Intermediate System to Intermediate System (IS-IS)), Label Distribution Protocol (LDP), Resource Reservation Protocol (RSVP)) that communicate with other network elements to exchange routes and select those routes based on one or more routing metrics.

Neighboring network elements (or "neighbors") are two network elements that have interfaces to a common network, wherein an interface is a connection between a network element and one of its attached networks. The Hello protocol ensures that communication between neighbors is bi-directional by periodically sending Hello packets out of all of the network element interfaces. Bi-directional communication is indicated when the network element "sees" itself listed in the neighbor's Hello packet. On broadcast and non-broadcast multi-access (NBMA) networks, the Hello protocol elects a designated router (DR) and backup designated router (BDR) for the network.

An adjacency is a relationship formed between selected neighboring network elements for the purpose of exchanging routing information and abstracting the network topology. One or more network element adjacencies may be established over an interface. Not every pair of neighboring network elements becomes adjacent. As part of bringing up an adjacency, the network elements exchange routing information by sending each other link state requests (LSRs) and receiving in reply link state advertisements (LSAs), containing the status of the interface and adjacency information. Because adjacency information is contained in LSAs, the protocol can detect dead network elements in a timely fashion.

Within a given network element, neighbor network elements are reflected in a neighbor data structure, which contains all information pertinent to a forming or formed adjacency between the two neighbors. The state in the neighbor data structure is maintained by a neighbor state machine (NSM). This neighbor data structure includes, among other data, a description of the state of the neighbor conversation (in a neighbor state field) and several lists of LSAs: a retransmission list, a complete list of LSAs that make up the area link-state database (the database summary list), and a list of LSAs that must be received from the neighbor in order to synchronize the two neighbors' databases (the LSR list).

For greater reliability, a single network element acting as an OSPF network element may use a technique called Non-stop Routing (NSR), in which information is synchronized between a first OSPF instance and a second OSPF instance within the single network element; one of the OSPF instances acts as the active OSPF instance and the other acts as a standby OSPF instance. In this case, a failure of the active OSPF instance and switchover to the standby OSPF instance does not result in any loss of OSPF protocol synchronization.

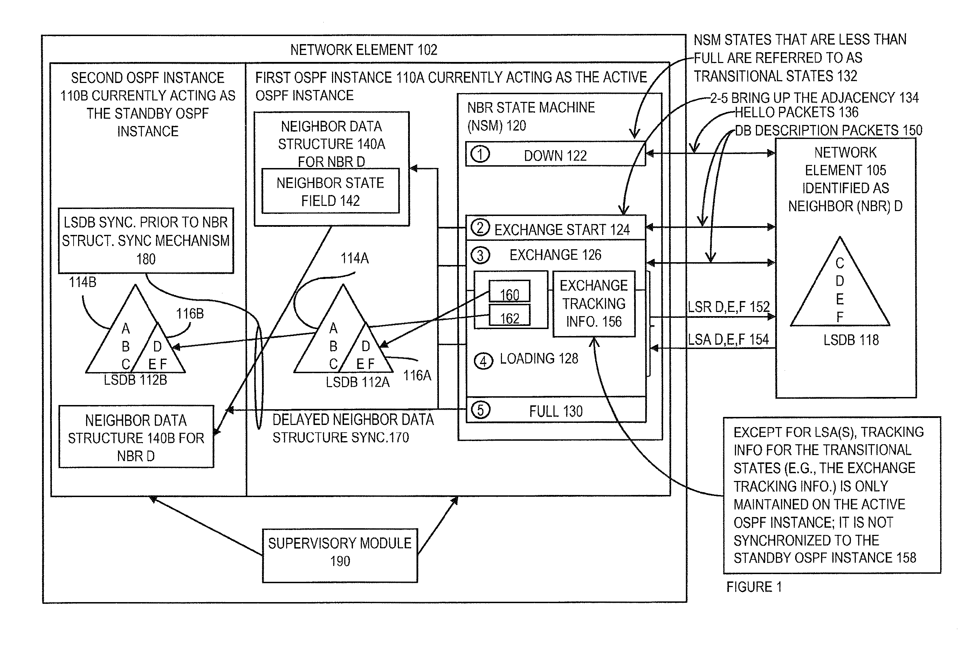

Figure 1 is a block diagram illustrating an example of OSPF NSR with delayed neighbor synchronization according to embodiments of the invention. Figure 1 shows a network element **102** and a network element **105,** where the network element **105** will be identified as neighbor (NBR) D in the link state databases (LSDBs). The network element **102** includes a first OSPF instance **110A** and a second OSPF instance **110B.** In the example of figure 1, the first OSPF instance **110A** is currently acting as the active OSPF instance, while the second OSPF instance **110B** is currently acting as the standby OSPF instance.

The first OSPF instance **110A** and the second OSPF instance **110B** respectively include a LSDB **112A** and LSDB **112B.** The LSDBs **112A-B** respectively include a previously learned set of LSAs **114A-B** and a to-be-learned set of LSAs **116A-B.** The previously learned sets of LSA **114A-B** are shown to include neighbors A, B, and C.

The first OSPF instance **110A** includes a neighbor state machine (NSM) **120.** The NSM **120** implements the states from OSPF version 2, including the subset of those states illustrated in figure 1 - namely, Down **122,** Exchange Start **124,** Exchange **126,** Loading **128,** and Full **130.** The NSM states that are less than the Full **130** state are referred to as transitional states **132.**

A circled number is used to represent the order in which the states are performed in the example shown in figure 1. In the example of figure 1, the NSM **120** operates to bring up in the network element **102** an adjacency with the network element **105** as neighbor D. The Exchange Start **124,** Exchange **126,** Loading **128,** and Full **130** states are referred to as the states that bring up the adjacency **134.**

At circled number 1, hello packets **136** are exchanged by the network element **102** and the network element **105** while the NSM **120** is in the DOWN **122** state. Either directly from the DOWN **122** state or through another state of the NSM **120,** the NSM **120** reaches the Exchange Start **124** state at circled 2; this is followed by a transition to the Exchange **126** state at circled 3. During the Exchange Start **124** state and the Exchange **126** state database description packets **150** are exchanged between the network element **102** and the network element **105.** In addition, a neighbor data structure **140A** for neighbor D is maintained by the first OSPF instance **110A.** The neighbor data structure **140A** includes a neighbor state field **142** which is updated to reflect the state of the NSM **120,** as well as other information per OSPF version 2.

During the Exchange **126** state, the first OSPF instance **110A:** 1) learns that the LSDB **118** of the network element **105** includes neighbors C, D, E, and F; and 2) that neighbor C is already in the previously learned set of LSAs **114A,** but neighbors D, E, and F are not.

At circled 4, the NSM 120 transitions to the Loading **128** state once exchange of the database description packets 150 is completed.

As shown in figure 1, the NSM **120** transmits one or more link state requests (LSRs) **152** for neighbors D, E, and F to the network element **105,** and in response the first OSPF instance **110A** receives one or more LSAs **154** for neighbors D, E and F from the network element **105.** A bracket spanning the Exchange **126** and Loading **128** states represents that the network element **102** may be transmitting the LSR(s) 152 and receiving LSA(s) 154 during both states.

Block **160** illustrates that the LSAs **154** for neighbors D, E, and F are installed in the LSDB **112A** (the to-be-learned set of LSAs **116A** have now been learned). Block **162** illustrates that these same LSAs are synchronized to the LSDB **112B.** Blocks **160** and **162** are performed responsive to the LSA(s) 154, and thus are performed during the state of the NSM **120** when received (be it the Exchange **126** or the Loading 128 states).

During the Exchange **126** and Loading **128** states, the database description packets **150,** the LSRs **152,** and the LSAs **154** are reliably exchanged per OSPF version 2. Such reliable exchange requires tracking which LSRs have been sent, whether those LSRs have been replied to, and retransmission of any LSRs that have not been replied to. This tracking information is represented in figure 1 as exchange tracking information **156.** In OSPF version 2, this exchange tracking information **156** would include the LSR list. Block **158** illustrates that except for the LSA(s), the information pertaining to the transitional states of the NSM **120** (e.g., the exchange tracking information **156)** is only maintained on the active OSPF instance (in the example of figure 1, the first OSPF instance **110A);** it is not synchronized to the standby OSPF instance. This is in contrast to a straightforward NSR approach that would synchronize this information; and such synchronization would place a relatively high demand on interprocess communication (IPC) during initial adjacency establishment for very little gain at steady state. Additionally, maintaining such a list requires transmission of LSRs from the active OSPF instance to the standby OSPF instance and removal of LSRs from both the active OSPF instance and the standby OSPF instance. Also, since such synchronization needs to be reliable, it necessitates some form of acknowledgment or retransmission, complicating the communication between the active OSPF instance and the standby OSPF instance. Furthermore, when the standby OSPF instance assumes active OSPF instance's role, the standby OSPF instance also needs to continue to send LSRs to its neighbors to obtain the missing LSAs, adding more logic and states at the time of switch-over.

At circled 5, the NSM **120** transitions to the Full **130** state, and an arrowed line from the neighbor data structure **140A** to the neighbor data structure **140B** in the second OSPF instance **140B** indicates that the neighbor data structure **140B** is created in the second OSPF instance **110B** from the neighbor data structure **140A** only after the NSM **120** transitions to the Full **130** state. Thus, the creation of and syncing of the neighbor data structure **140B** with the neighbor data structure **140A** (which could also be described as a copying of the neighbor data structure **140A** into the second OSPF instance **110B** as the neighbor data structure **140B)** that would normally have occurred during the transitional states **132** is not performed; rather there is a delayed neighbor data structure synchronization **170** that occurs during the Full **130** state of the NSM **120.**

In one embodiment, a subset of the data items of the neighbor data structure 140A is synchronized to the neighbor data structure 140B during the delayed neighbor data structure synchronization 170. For example, in one embodiment, only the following data items (defined in section 10 of RFC 2328) from the neighbor data structure 140A are synchronized: the Neighbor ID (which is the OSPF Router ID of the neighboring element), the Neighbor Priority (which is the Router Priority of the neighboring network element), and the Neighbor IP address (which is the IP address of the neighboring network element's interface to the attached network). Other data items in the neighbor data structure 140A (e.g., the State (the functional level of the neighbor conversation), the Inactivity Timer (which is a timer whose firing indicates that no Hello Packet has been seen from this neighbor recently), the Master/Slave relationship, the database description (DD) sequence number, the last received DD packet, the Neighbor Options, the Neighbor's Designated Router, the Neighbor's Backup Designated Router) may be recovered or generated by the OSPF instance 110B and may not be synchronized (in some embodiments the OSPF instance 110B recovers or generates these data items only after it transitions to become the active OSPF instance). Thus, in some embodiments, even though a subset of the data items of the neighbor data structure 140A of the OSPF instance 110A is synchronized to the neighbor data structure 140B of the OSPF instance 110B, the OSPF instance 110B will create and populate the neighbor data structure 140B with the full amount of data items (e.g., the data items as defined in RFC 2328). Of course it should be understood that in other embodiments more or less data items may be synchronized from the neighbor data structure 140A to the neighbor data structure 140B. In addition, information local to the network element 102 that is not defined in RFC 2328 may be synchronized during the delayed neighbor data structure synchronization 170 (e.g., an internal identifier of the network element 102 that identifies the interface).

In another embodiment, all of the data items of the neighbor data structure 140A as they exist after transitioning to the Full 130 state are synchronized with the neighbor data structure 140B during the delayed neighbor data structure synchronization 170.

The approach in figure 1 saves on complexity (see block **158)** at the cost of the standby OSPF instance having to start over (except for any synchronized LSA(s)) in the rare situations when the standby OSPF instance becomes the active OSPF instance prior to the delayed synchronization of the neighbor data structure (that is, during the transitional states of the active OSPF instance's NSM); in such rare instances, the lack of the neighbor data structure for neighbor D in the standby OSPF instance causes this OSPF instance in its new role as the active to start its own NSM over as opposed to picking up where the previous active OSPF instance's NSM left off (with the exception that any entries in its LSDB learned during the Exchange state of the previously active OSPF instances NSM need not be exchanged again).

Figure 1 also illustrates that a mechanism 180 is used to ensure that the LSDB synchronization between the LSDB **112A** and LSDB **112B** will occur prior to the creation and synchronization of the neighbor data structure **140B.** Different embodiments of the invention may use different mechanisms, including: 1) using a single IPC pipe and sending the LSAs followed by the neighbor data structure synchronization through that same IPC pipe; 2) where multiple pipes are used, requiring at the first OSPF instance **110A** acknowledgments back from the second OSPF instance **110B** for all of the LSAs requested from the neighbor during database exchange prior to the neighbor data structure synchronization; etc.

Figure 1 also illustrates a supervisory module **190,** which in one embodiment of the invention is responsible for the instantiation of the active and standby OSPF instances, and for managing the switchovers to the standby OSPF instance.

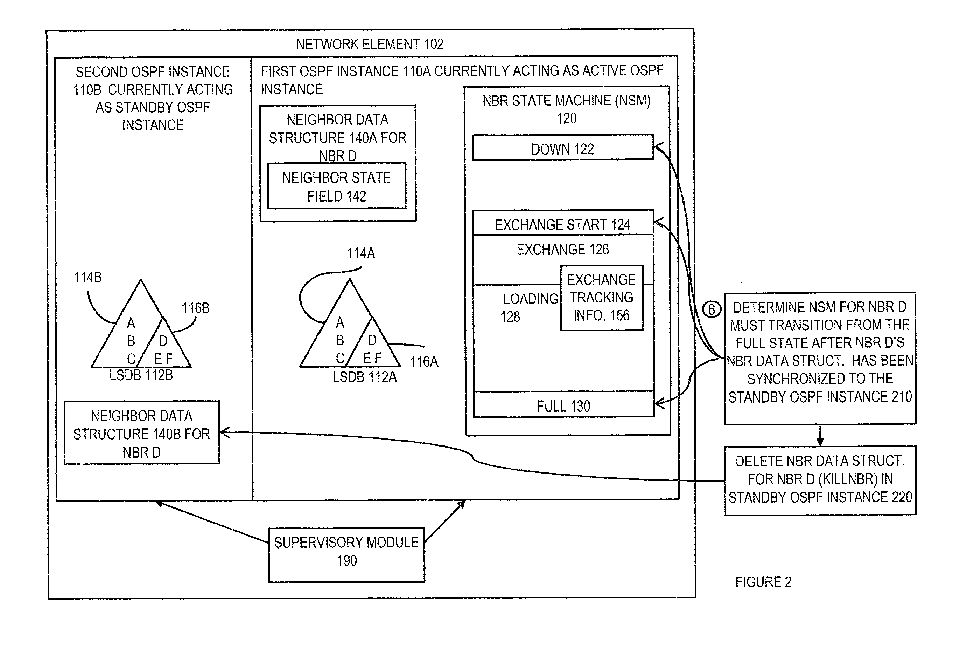

Figure 2 is a block diagram and a flow diagram illustrating an example of the NSM **120** transitioning from the full state according to embodiments of the invention. Figure 2 shows with like reference numerals many of the same blocks from figure 1; as such, a description of these blocks is not repeated here. The flow diagram of figure 2 is performed sometime after the synchronization of the neighbor data structure **140B.** The flow diagram begins in block **210,** where it is determined that the NSM **(120)** for neighbor D must transition from the Full **130** state after neighbor D's neighbor data structure has been synchronized to the standby OSPF instance **(110B).** Block **210** may be performed for a variety of reasons, including a failure on the link between the network element **120** and the network element **105,** a failure of the network element **105** to respond to Hello protocol messages (signifying that the OSPF instance in the network element **105** has gone down), etc. From block **210,** control passes to block **220.**

As shown in block **220,** the neighbor data structure (140B) for neighbor D is deleted from the standby OSPF instance. While different embodiments may perform this operation in different ways, one embodiment of the invention uses the KILLNBR event from OSPF version 2, RFC 2328. From block **220,** processing of the NSM **120** state transition would be performed as is known in the art. Such a state transition could be performed to different states of the NSM **120** as illustrated by the circled 6, including the Exchange Start **124** and the DOWN **122** states.

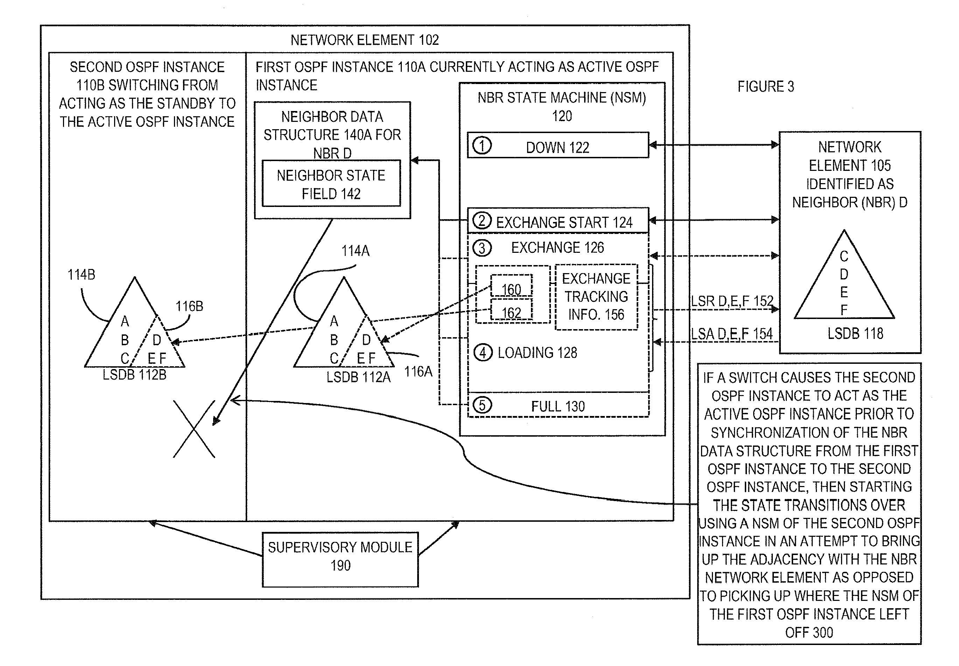

Figure 3 is a block diagram and a flow diagram illustrating an example of the second OSPF instance **110B** being switched from standby to active prior to the synchronization of the neighbor data structure **140A** according to embodiments of the invention. Figure 3 shows with like reference numerals many of the same blocks from figure 1; as such, a description of these blocks is not repeated here. However, it is worthy of note that the following blocks are dashed to indicate that they may not have been created/performed prior to the second OSPF instance **110B** being switched from standby to active: Exchange **126** state, Loading **128** state, Full **130** state, exchange tracking information **156,** database description packets **150** exchanged during the exchange **126** state, the LSR(s) **152,** the LSA(s) **154,** the to be learned sets of LSAs **116A-B.** Also, the neighbor data structure **140B** has been replaced by an X to indicate that it was not created, and the arrowed line labeled delayed neighbor data structure synchronization **170** is not present.

The flow diagram of figure 3 is performed responsive to the second OSPF instance **110B** being switched from standby to active prior to the synchronization of the neighbor data structure **140A.** Block **300** illustrates that if a switch causes the second OSPF instance **(110B)** to act as the active OSPF instance prior to the synchronization of the neighbor data structure **(140A)** from the first OSPF instance **(110A;** the OSPF instance previously acting as active) to the second OSPF instance **(110B;** the OSPF instance previously acting as standby but now acting as active), then starting the NSM state transitions over using an NSM of the second OSPF instance **(110B)** in an attempt to bring up the adjacency with the neighbor network element **(105)** as opposed to picking up where the NSM **(120)** of the first OSPF instance left off. Thus, figure 3 illustrates the relatively rare situation where the previously described cost must be paid for having avoided the complexity of synchronizing the information pertaining to the transitional states (e.g., the exchange tracking information **156).**

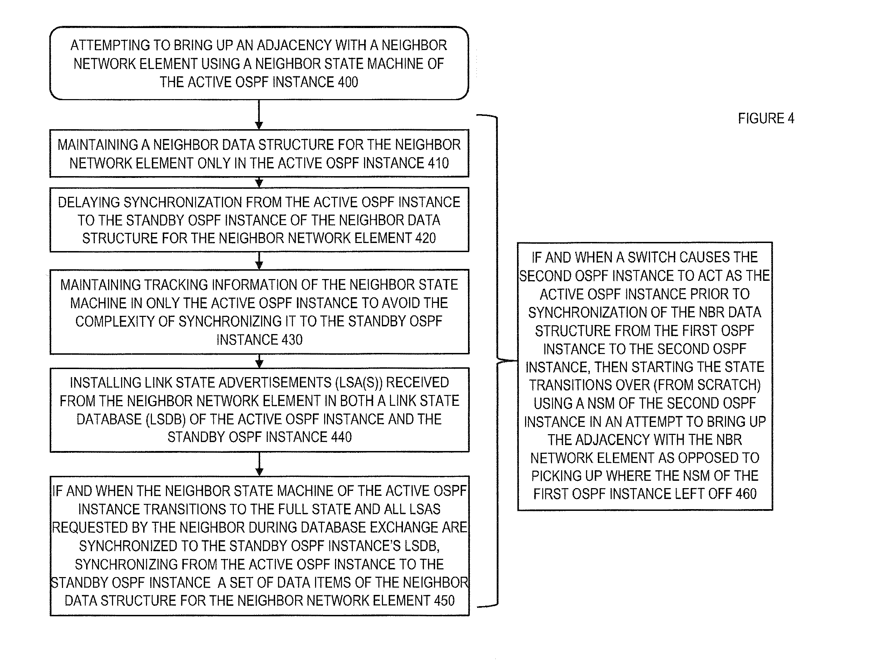

Figure 4 is a flow diagram illustrating OSPF non-stop routing (NSR) with delayed neighbor synchronization according to embodiments of the invention. The flow diagram is performed when attempting to bring up an adjacency with a neighbor network element using a neighbor state machine of the active OSPF instance **(400).** From block **400,** control passes to block **410.** As shown in figure 4, the attempting includes: maintaining a neighbor data structure for a neighbor network element only in the active OSPF instance (block **410);** delaying synchronization from the active OSPF instance to the standby OSPF instance of the neighbor data structure for the neighbor network element (block **420);** maintaining tracking information of the neighbor state machine in only the active OSPF instance to avoid the complexity of synchronizing it to the standby OSPF instance (block **430);** installing link state advertisements received from the neighbor network element in both a link state database of the active OSPF instance and the standby OSPF instance (block **440);** and, if and when the neighbor state machine of the active OSPF instance transitions to the Full state and all LSA(s) requested from the neighbor during database exchange are synchronized to the standby OSPF instance's LSDB, synchronizing from the active OSPF instance to the standby OSPF instance a set of one or more data items of the neighbor data structure (e.g., the data items may be a subset of the data items of the neighbor data structure or all of the data items of the neighbor data structure) for the neighbor network element (block **450).**

Figure 4 also shows that block **460** may be performed at any point between blocks **410** and **450.** Block **460** illustrates that, if and when a switch causes the second OSPF instance to act as the active OSPF instance prior to synchronization of the NBR data structure from the first OSPF instance to the second OSPF instance, the method responds by starting the state transitions over using an NSM of the second OSPF instance in an attempt to bring up the adjacency with the neighbor network element as opposed to picking up where the NSM of the first OSPF instance left off.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the spirit and scope of the appended claims. The description is thus to be regarded as illustrative instead of limiting.

## Claims

1. A method in a network element for Open Shortest Path First (OSPF) non-stop routing, wherein the network element includes a first OSPF instance currently acting as an active OSPF instance and a second OSPF instance currently acting as a standby OSPF instance, the method comprising:
attempting to bring up an adjacency with a neighbor network element using a neighbor
state machine of the active OSPF instance, the step of attempting including,
maintaining a neighbor data structure for the neighbor network element only in
the active OSPF instance prior to the neighbor state machine transitioning to a Full state;
delaying synchronization from the active OSPF instance to the standby OSPF instance of the neighbor data structure for the neighbor network element;
maintaining tracking information of the neighbor state machine in only the active OSPF instance to avoid the complexity of synchronizing it to the standby OSPF instance;
installing link state advertisements (LSAs) received from the neighbor network element in both a link state database (LSDB) of the active OSPF instance and the standby OSPF instance; and
if and when the neighbor state machine of the active OSPF instance transitions to the Full state and all of the LSAs requested from the neighbor during database exchange are ensured to synchronize to the standby OSPF instance's LSDB, then synchronizing from the active OSPF instance to the standby OSPF instance a set of one or more data items of the neighbor data structure for the neighbor network element;
if and when a switch causes the second OSPF instance to act as the active OSPF instance prior to synchronization of the neighbor data structure from the first OSPF instance to the second OSPF instance, then starting the state transitions over using a neighbor state machine of the second OSPF instance in an attempt to bring up the adjacency with the neighbor network element as opposed to picking up where the neighbor state machine of the first OSPF instance left off.

2. The method of claim 1, wherein said step of attempting further includes:
requiring, prior to said step of synchronizing, at the first OSPF instance acknowledgements back from the second OSPF instance for all of the LSAs requested from the neighbor during database exchange to ensure all of these LSAs will be synchronized to the standby OSPF instance's LSDB.

3. The method of claim 1, wherein:
the step of installing includes sending the LSAs from the active OSPF instance to the standby OSPF instance via a single interprocess communication (IPC) pipe; and
the step of synchronizing includes sending the set of data items from the active OSPF instance to the standby OSPF instance via the same single IPC pipe, whereby all of the LSAs requested from the neighbor during database exchange are ensured to synchronize to the standby OSPF instance's LSDB prior to synchronization of the neighbor data structure.

4. The method of claim 1, wherein the only components of the neighbor data structure that are synchronized between the active and standby OSPF instances during the step of synchronizing are the neighbor ID, neighbor priority, and neighbor IP address.

5. The method of claim 1, wherein the synchronizing includes synchronizing the entire neighbor data structure from the active OSPF instance to the standby OSPF instance.

6. The method of claim 1, wherein the method further comprises:
if and when the active OSPF instance neighbor state machine transitions a neighbor's state from the Full state after that neighbor's data structure has been synchronized to the standby OSPF instance, deleting from the standby OSPF instance that neighbor's neighbor data structure.

7. An apparatus comprising:
a network element supporting open shortest path first (OSPF) non-stop routing (NSR)
with an active OSPF instance and a standby OSPF instance, the network element configured to implement,
the active OSPF instance to operate a neighbor state machine (NSM) to attempt
to bring up an adjacency with a neighbor network element, the NSM including the down, exchange start, exchange, loading, and full states of OSPF, wherein the NSM is configured to,
cause installation of any link state advertisements (LSAs) received from
the neighbor network element in both a link state database (LSDB) of the active OSPF instance and a LSDB of the standby OSPF instance during the loading state; and
cause a delayed synchronization from the active OSPF instance to the
standby OSPF instance of a set of data items from the neighbor data structure of the active OSPF instance until after the NSM of the active OSPF instance transitions to the Full state and all of the LSAs requested from the neighbor during the database exchange state are ensured to synchronize to the standby OSPF instance's LSDB; and
the standby OSPF instance, responsive to a switch causing it to act as the active OSPF
instance prior to the synchronization of the neighbor data structure to it, to start over, except for any synchronized ones of the LSAs, using its own NSM in an attempt to bring up the adjacency with the neighbor network element.

8. The apparatus of claim 7, wherein the NSM of the active OSPF instance is also to maintain exchange tracking information, except for the LSAs, pertaining to the transitional states of the NSM only on the active OSPF instance.

9. The apparatus of claim 8, wherein the exchange tracking information includes a list of the LSAs requested from the neighbor.

10. The apparatus of claim 7, wherein a single interprocess communication (IPC) pipe is used to send the LSAs followed by the set of data items from the active OSPF instance to the standby OSPF instance.

11. The apparatus of claim 7, wherein multiple interprocess communication (IPC) pipes are used to send the LSAs and the set of data items from the active OSPF instance to the standby OSPF instance, and wherein the active OSPF instance requires acknowledgements back from the standby OSPF instance for all of the LSAs requested from the neighbor during the database exchange state prior to the set of data items being sent to the standby OSPF instance.

12. The apparatus of claim 7, wherein the neighbor data structure of the active OSPF instance includes a neighbor state field whose contents represents the current one of the NSM's states.

13. The apparatus of claim 7, wherein the active OSPF instance's NSM is also configured to cause, after the active OSPF instance's neighbor data structure has been synchronized to the standby OSPF instance, the standby OSPF instance's neighbor data structure to be deleted responsive to a determination that the active OSPF instance's NSM must transition from the full state.

14. The apparatus of claim 7, wherein communications of the active OSPF instance's NSM with the neighbor network element include hello packets during the down state, database description packets during the exchange start and exchange states, link state requests, and the LSA packets, wherein receipt of a final one of the LSA packets marks the end of the loading state.
